# EUROPEAN PATENT SPECIFICATION

(11) **EP 0 640 848 B1**
(45) Date of publication and mention of the grant of the patent: **17.06.1998**
(21) Application number: 93306819.9
(22) Date of filing: 27.08.1993
(51) Int. Cl.: G01V 5/10

(54) **Apparatus for measuring gamma spectra in cased well**
Geraet zum Messen von Gammaspektren in verrohrtem Bohrloch
Dispositif pour mesurer des spectres gamma dans de puit cuvelé

(43) Date of publication of application: 01.03.1995
(73) Proprietor: Halliburton Energy Services, Inc., Houston, Texas 77056 (US)
(72) Inventor: Jacobson, Larry A., Richmond, Texas 77349 (US)
(74) Representative: Wain, Christopher Paul

(56) References cited:
- EP-A- 0 416 970
- US-A- 3 213 279
- US-A- 3 752 984
- US-A- 3 767 921
- US-A- 4 020 342
- US-A- 4 424 444
- US-A- 4 596 927
- US-A- 4 766 543

## Description

This invention relates to an apparatus for measuring gamma ray spectra in cased borehole.

Proposals to use induced gamma ray spectroscopy for detecting the carbon/oxygen ratio in a well borehole date back several decades. Commercial operations in this field began in the mid-1970's. The primary applications today remain the cased hole determination of oil saturation in reservoirs of low or unknown water salinity. Recent efforts have expanded the use of the technique to geochemical analysis in open hole. Unfortunately, the intrinsic dynamic range of the carbon/oxygen ratio measurement is small. This requires very high statistical precision for reasonable oil saturation uncertainty. Until recently, the technique has been very slow and often required stationary measurements. This was in part because of the small intrinsic dynamic range of the carbon oxygen ratio, but also because the detectors used in well logging instruments had significant limitations.

Over the past decade or so, several new high density scintillators have become available which can provide improved gamma ray detection capability. Newer carbon/oxygen and geochemical logging tools can use these new high density scintillators. One of these materials is bismuth germanate (BGO). The merit of the high density scintillator relative to conventional sodium iodide detectors (previously used in induced gamma ray spectrometers) is that it provides substantially better detection efficiency. That is, a larger fraction of the total gamma ray flux is in the full energy or first escape peak. Less gamma ray energy is disposed in the structureless Compton scattered low energy tail, in the more dense bismuth germanate detectors relative to sodium iodide.

In US-A-4766543 there is disclosed a generalized computer-based system and method for acquisition of nuclear well logging data, including downhole generation of energy and time spectral information. A downhole instrument traverses a borehole introducing high energy neutrons into the formation at prescribed depths. Resultant gamma rays are detected and converted into pulses which are amplified and conditioned.

A downhole multi-parameter analyzer stores pulse height and arrival time for each detected gamma ray whereby time and energy spectra are formed. Spectra include, alone or in combination, time spectra of the neutron source, inelastic and capture energy spectra. From the source time spectra, peaks are detected and capture and inelastic gates referenced thereto. Also thermal neutron decay between source bursts is derived. From the energy spectra peaks including hydrogen or iron are detected and used for calibration and automatic gain control of the gamma ray detector.

High speed buffer means and direct memory access enables access to memory by both the multi-parameter analyzer and CPU so as to avoid inhibiting data acquisition during processing of the acquired spectra by the CPU. Parameters including pulse discrimination level, detector gain, and gate positioning affecting the spectra generated downhole, which may simultaneously include inelastic, capture, and time distribution spectra, are variable in the analyzer by means of CPU control functions.

In US-A-3767921 there is disclosed a method and apparatus for gamma ray spectroscopy well logging systems including a closed loop linearity control feature. A borehole tool provides gamma ray pulse data. The gamma ray counts in at least two portions of the gamma ray energy spectrum chosen so that their ratio remains relatively constant under usual borehole conditions are monitored. An error signal is developed if the ratio of gamma ray counts in the monitored portions of the energy spectrum deviate significantly from the constant ratio. The error signal is used to control the power supply voltage for the borehole tool and/or the surface amplification of the gamma ray pulse signals to preserve system linearity.

We have now devised an improved apparatus for downhole gamma ray logging which cannot only utilise the more dense detectors, but also uses a unique gain stabilization system to achieve more accurate energy representation of the detected gamma rays by more precisely controlling the system gain.

According to the invention, there is provided apparatus for measuring gamma ray spectra in cased well boreholes, which apparatus comprises:
a) an electronic source of monoenergetic fast neutrons for emission in pulses to penetrate borehole fluid casing and its cement sheath and enter the earth formations in the vicinity of the borehole, to be moderated to thermal energy and captured by the nuclei of elements in and about the borehole;
b) a high density scintillation detector optically coupled to a photomultiplier for detecting gamma radiation induced by said neutrons and to produce output electrical pulses having a height representative of the energy of a gamma ray impinging on said high density scintillator;
c) pulse height analyzer means connected to the output of said scintillation detector and said photomultiplier for separating the gamma ray energy spectrum of impinging gamma rays into energy components and for making counts of said energy components as a function of energy;
d) timing means for generating time gates to time separate fast neutron induced gamma rays, thermal neutron capture gamma rays, and background gamma rays prior to their presentation to said pulse height analyzer; and
e) gain control means utilizing the iron edge of the thermal neutron capture gamma ray spectrum for gain stabilizing said photomultiplier output, the gain value thus established being applied to all inelastic capture and background spectra measured.

The induced gamma ray spectrometry tool of the present invention uses a monoenergetic, preferably 14 MeV, source to irradiate earth formations in the vicinity of the borehole with 14 MeV neutrons. Time gates are provided to detect both capture gamma ray spectra and an inelastic scattering gamma ray spectrum. A bismuth germanate (BGO) detector is preferably used in the system of the present invention. Output pulses from the photomultiplier tube which is optically coupled to the BGO detector are supplied to a pulse height analyzer, having 256 channel of energy resolution. A portion of the measured capture gamma ray spectrum itself, employing the iron edge, is used to gain stabilize pulse height analyzer circuitry thereby making it extremely stable.

The downhole measured pulse height spectra are accumulated in a downhole memory which is part of the pulse height analyzer and are telemetered to the surface via a digital telemetry system at regular intervals. A surface computer then is programmed to analyze the spectra and to record various quantities of interest, such as the carbon/oxygen ratio; the silicon to calcium ratio; and other parameters of interest in neutron induced gamma ray spectroscopy logging.

In order that the invention may be more fully understood, reference is made to the accompanying drawings, in which:
Fig. 1 is a schematic diagram illustrating a well logging system, in accordance with concepts of the present invention, disposed in a well borehole;
Fig. 2A is a timing diagram showing the timing of a short spaced burst subsequence for both the neutron source and detector when used in accordance with concepts of the present invention;
Fig. 2B is a timing diagram showing the timing subsequence for a slow or long spaced neutron burst subsequence for both the neutron source and the detector when used in accordance with concepts of the present invention;
Fig. 3 is a diagram illustrating an inelastic gamma ray spectrum taken with an instrument according to the concepts of the present invention; and
Fig. 4 is a schematic diagram illustrating a capture gamma ray spectrum taken according to the concepts of the present invention and showing gain stabilization of energy windows.

### DETAILED DESCRIPTION OF THE INVENTION

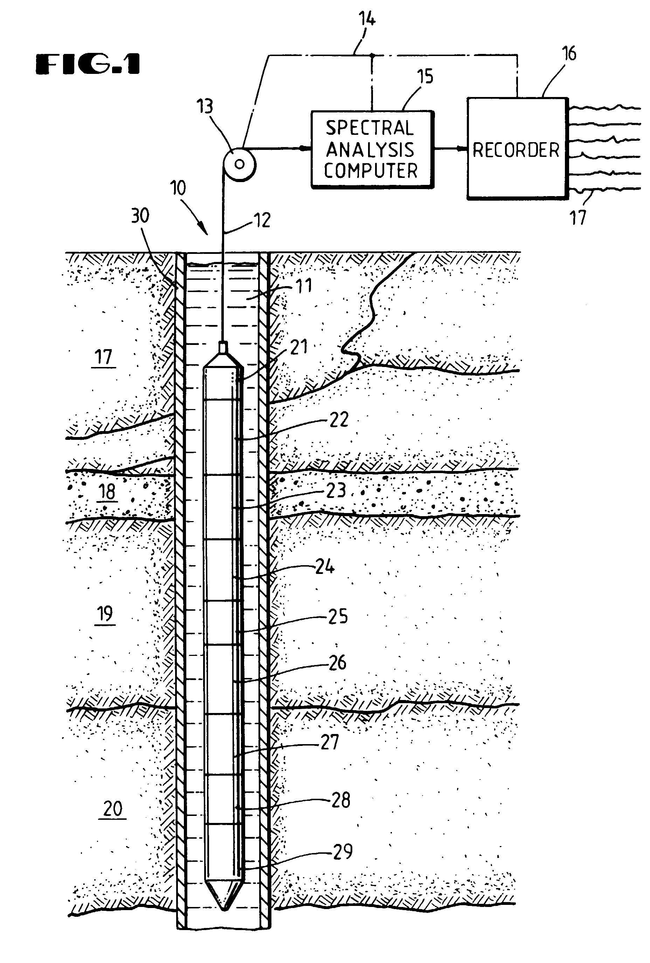

Referring initially to Fig. 1, a well logging system in accordance with concepts of the present invention is illustrated in a very highly schematic manner in a cased well borehole. A well borehole **10** lined with a steel casing **30** and filled with a borehole fluid **11** penetrates earth formations **17, 18, 19** and **20**. A well logging cable **12,** which is of the usual armored multiconductor cable type, supports in the borehole 10, a well logging sonde **21** for making neutron induced gamma ray spectral measurements in accordance with the concepts of the present invention. The well logging cable **12** passes over a sheave wheel **13** which maybe electrically or mechanically coupled, as indicated by a dotted line **14,** to a spectral analysis computer **15** and a data recorder **16**. The spectral analysis computer **15** may comprise, for example, any suitably programmed general purpose computer capable of receiving signals from the downhole equipment. The recorder **16** may comprise a strip chart recorder, as indicated having a record medium **17**, or may comprise a digital tape or a disk file memory as desired.

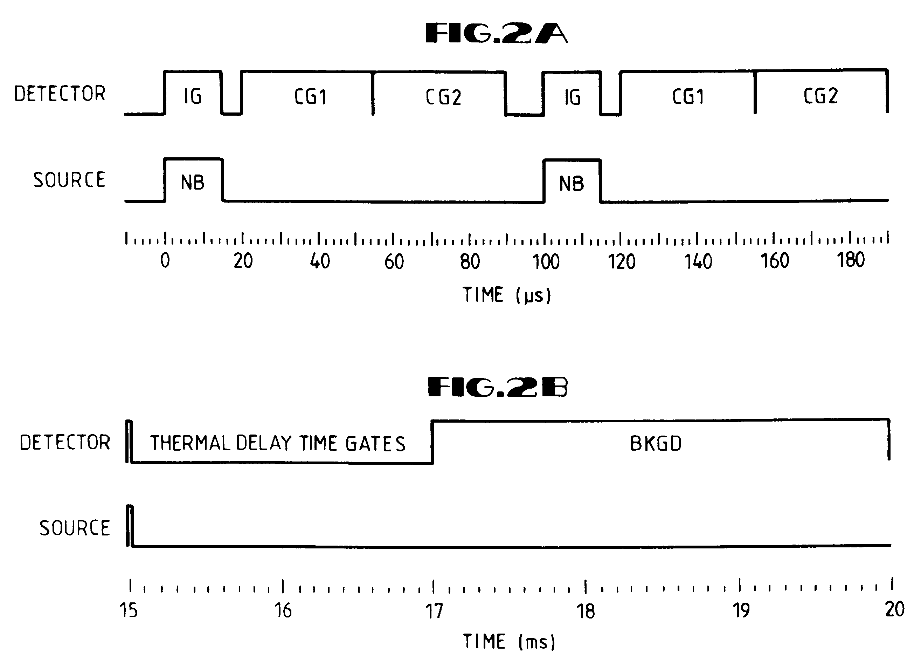

The downhole sonde **21** comprises a power supply portion **22**, a timing circuit portion **23**, a telemetry portion **24**, a gain stabilizer portion **25**, a pulse height analyzer portion **26**, a detector portion **27**, a source portion **28**, and a high voltage power supply portion 29. In operation, the power supply portion 22 takes electrical power from one or more of the conductors of logging cable 12 and converts it to appropriate voltage and current levels for supplying internal circuits of the downhole sonde 21 with electrical power as required. The timing circuits, as will be discussed in more detail subsequently in conjunction, with Figure 2, provide timing pulses for opening and closing various data gates and thereby operating various detection schemes according to the concepts of the invention. The telemetry circuitry 24 is a conventional digital telemetry system capable of communicating to and from the surface supplied equipment at a rate of 50 kilobits/sec.

The gain stabilizer circuit 25, which will be described in more detail subsequently, operates in conjunction with the pulse height analyzer 26. The analyzer 26 receives signals from the detector portion of the tool 27. The detector signals are representative of gamma rays impinging upon the detector and which have been induced by a neutron bombardment from a neutron source 28 which is supplied for its operation by approximately 100 kilovolt high voltage power supply 29 or from a background gamma ray source.

Figure 2, comprising a fast timing subycycle shown as Figure 2a and a slower timing subcycle shown as Figure 2b, illustrates the timing applied to both the neutron source 28 and the detector circuits 26,27 in the present invention. Referring initially to Figure 2b, a timing cycle of 5 milliseconds in duration and repeated 50 times/sec. is illustrated. The neutron source 28 is turned on for a very short 14 MEV neutron pulse having a time duration of approximately 15 microseconds at the beginning of this 5 millisecond duration sub-cycle.

During the 1985 microseconds after the neutron source is turned off, a plurality of time gates are opened to measure the thermal neutron population die-away as a function of time. Up to six, eight or even more gates maybe used as desired according to known techniques such as that of U.S. Patent 4,424,444. Using this technique the borehole and formation thermal neutron capture cross-sections are measured. Thus the die-away of thermal neutrons produced by the moderation of the fast neutrons emitted by the neutron source 28 are detected for the first two milliseconds of this 5 millisecond subcycle. For the remaining 3 milliseconds of the subcycle portion of Figure 2b, then, the detector 27 is used to detect background gamma radiation due to naturally occurring gamma rays in the earth formations surrounding the well bore. All measurements may thus be corrected for background based on this background measurement by subtraction of the appropriately scaled count rate.

During the fast pulse portion of the timing diagram illustrated in Figure 2a, it may be observed that the neutron source is pulsed on for fifteen microsecond duration pulses (indicated as NB in the timing diagram). In Figure 2a, while the neutron bursts starting at time T = zero and T = 100 microseconds are taking place an inelastic scattering gamma ray time gate is opened allowing pulses from the detector 27 occurring during the neutron burst to be gated to the pulse height analyzer circuitry 26. At the close of the neutron burst, the detector 27 is gated off for approximately 5 microseconds. This allow thermalization of the fast neutrons. Then a first capture gamma ray time gate having a duration of thirty-five from 20 to 55 microseconds) is opened. A second capture gamma ray time gate having a duration of thirty-five microseconds (from 55 to 90 microseconds) is opened thereafter. These gates are labelled respectively CG1 and CG2 in Figure 2a. The entire short or fast pulse cycle is then repeated beginning at the time labelled 100 microseconds of Figure 2a and the neutron source and detector timing are repeated as previously described for the next 100 microseconds. The entire sequence which is illustrated in Figure 2a is repeated for a period of 1500 microseconds. The short or fast pulse subintervals of 100 microseconds duration are time interlocked with the longer 5 millisecond intervals illustrated in Figure 2B. Timing pulses suitable for this purpose are produced in Timing Circuit section 23 of Figure 1.

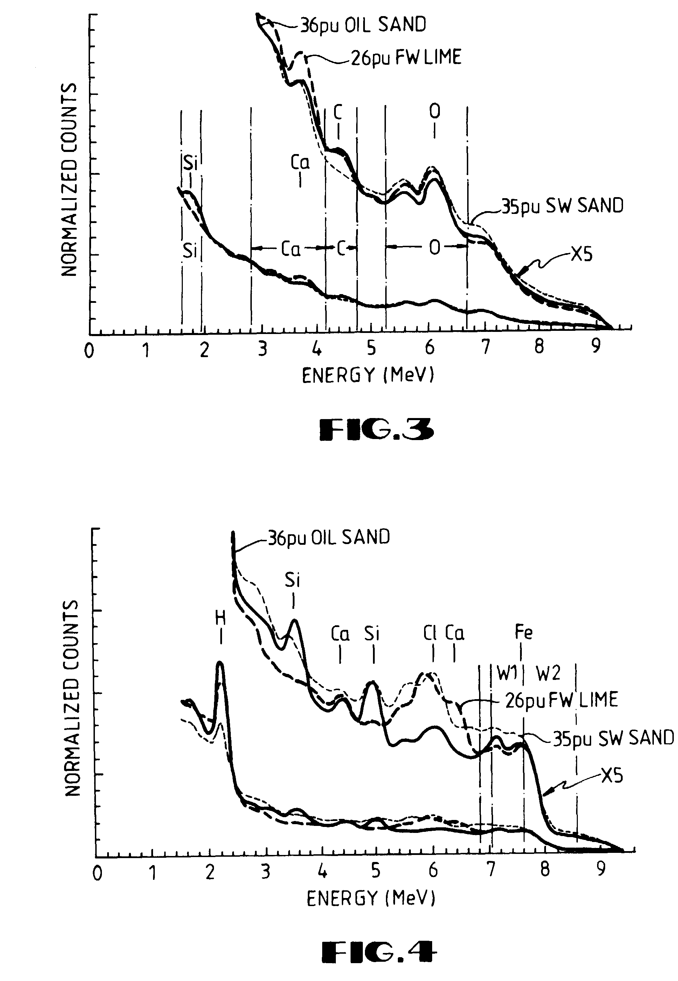

Referring now to Figure 3, an inelastic gamma ray energy spectrum which comprises gamma ray pulses detected during the gates labelled **IG** (inelastic gamma rays) in Figure 2a and supplied to the pulse height analyzer 26 during this time when the neutron bursts are on is shown schematically. It will be observed that in the inelastic gamma ray spectrum that inelastic scattering peaks attributable to carbon, oxygen, silicon and calcium appear in the inelastic gamma ray spectrum. The inelastic spectrum of course is caused by a fast neutron scattering from the nucleus of an element in the vicinity of the borehole and exciting these nuclei to higher energy levels thereby losing some of fine energy of the scattered neutrons (ie. scattering with energy loss). The excited nuclei returning to the ground state emit gamma rays characteristic of each of the nuclear species. Energy windows labelled C, O, Ca, Si are shown in the spectrum of Figure 3 for the carbon, oxygen, silicon and calcium inelastic scattering energy peaks.

Referring now to Figure 4, a capture gamma ray spectrum is shown schematically. The capture gamma ray spectrum is taken in gates labelled CG**1** and CG2 in Figure 2a. This spectrum is attributable to the emission of gamma rays by the decay to the ground state of nuclei which have been excited by the capture of thermalized neutrons. As it takes perhaps several microseconds for all of the neutrons to become thermalized following the emission of a fast neutron burst from the source 28 of the instrument 21 shown in Figure 1, the waiting period of 5 microseconds between the end of the neutron burst to the beginning of the capture gamma ray gates illustrated in Figure 2a allows for thermalization of the fast 14 MeV neutrons emitted by the source 28 to achieve a thermal neutron population.

Referring again to Figure 4, it will be seen that the iron peak (labelled Fe in Figure 4) occurs at an energy of 7.65 MeV. Energy windows labelled W1 and W2 are positioned to straddle the Fe peak and are used for system gain control purposes. The iron peak will of course always be present in a cased well borehole in which the pulsed spectral gamma ray tool according to the concepts of the present invention is deployed.

The iron edge is always a prominent feature in cased well borehole spectrum, because the casing and the tool housing both contain iron. The iron peak is located at 7.65 MeV and is discernable, but not very prominent, in the capture gamma ray spectrum of Figure 4. This peak becomes less prominent if chlorine infested or salt water is present in the earth formations surrounding the borehole. However, all of the capture gamma ray spectra show a precipitous drop at energies just above the iron 7.65 MeV line. Thus, two equal width adjacent windows labelled W1 and W2 spanning this edge are indicated in Figure 4. Equality of width of these energy windows is not a critical requirement but is only made for convenience.

A spectral procedure for gain stabilization is based upon the count rates in the energy windows labelled W1 and W2. This procedure which is implemented in a microprocessor program in gain stabilizer 25 adjusts the photomultiplier high voltage (contained in detector 27) to maintain the ratio of counts in the energy window labelled W1 to that in energy window labelled W2 equal to the integer two. Again, this value of 2.0 is not particularly necessary as any value in the range from two to three would probably work just as well. It is merely convenient to use. Thus, the gain of the photomultiplier portion of detector 27 is increased whenever the ratio becomes greater than 2.0 and the gain of the photomultiplier is decreased whenever the ratio becomes less than 2.0. This places the juncture of the two windows near the upper count rate portion of the iron (Fe) edge. Because there are two gain settings where the window ratio will be 2, a start up procedure is required to assume selection of the correct gain value. This is accomplished by raising the photomultiplier gain until the count rate in the upper window W2 exceeds a predetermined minimum value prior to beginning the gain stabilization process as previously described.

Laboratory and field experience have demonstrated the utility and reliability of this technique of gain stabilization. Important and innovative features of this gain stabilization are that no isotopic source is required which would contribute a background to the primary measurement. Also, the stabilization is made on a feature of a capture gamma ray spectrum which is always present and which is unperturbed by formation matrix composition or borehole or formation fluid composition. Finally, stabilization of the pulse height analyzer spectral gain on a high energy feature of the spectrum renders the spectrum much less sensitive to zero offset.

It should also be noted that while the preferred embodiment previously described varies the high voltage on the photomultiplier tube itself inorder to effect gain stabilization, that this stabilization technique could equally well be applied to a variable gain amplifier which would come subsequent to the photomultiplier tube in the electronic circuitry comprising the detector 27 portion of the sonde 21 of Figure 1.

## Claims

1. Apparatus for measuring gamma ray spectra in cased well borehole, which apparatus comprises:
a) an electronic source (28) of monoenergetic fast neutrons for emission in pulses to penetrate borehole fluid (11), casing (30) and its cement sheath and enter the earth formations in the vicinity of the borehole, to be moderated to thermal energy and captured by the nuclei of elements in and about the borehole;
b) a high density scintillation detector (27), optically coupled to a photomultiplier for detecting gamma radiation induced by said neutrons and to produce output electrical pulses having a height representative of the energy of a gamma ray impinging on said high density scintillator;
c) pulse height analyzer means (26) connected to the output of said scintillation detector and said photomultiplier for separating the gamma ray energy spectrum of impinging gamma rays into energy components and for making counts of said energy components as a function of energy;
d) timing means (23) for generating time gates to time separate fast neutron induced gamma rays, thermal neutron capture gamma rays, and background gamma rays prior to their presentation to said pulse height analyzer; and
e) gain control means (25) utilizing the iron edge of the thermal neutron capture gamma ray spectrum for gain stabilizing said photomultiplier output, the gain value thus established being applied to all inelastic capture and background spectra measured.

2. Apparatus according to Claim 1, including means for producing gamma ray energy spectra of inelastic scattering induced gamma radiation during said pulses of fast neutrons.

3. Apparatus according to Claim 2, wherein said producing means is arranged to divide inelastic gamma ray spectra into energy components representative of inelastic gamma radiation produced by carbon, oxygen, silicon and calcium.

4. Apparatus according to Claim 3, wherein thermal neutron capture gamma ray spectra of gamma radiation induced by the capture of thermalized fast neutrons are detected during the quiescent interval between said neutron pulses.

5. Apparatus according to Claim 4, wherein said thermal neutron capture gamma ray spectra are divided into energy components representative of capture gamma rays from hydrogen, silicon, calcium, chlorine, potassium, sulfur, titanium and iron.

6. Apparatus according to Claim 5, wherein said gain control means (25) comprises a microprocessor programmed to control the gain of said photomultiplier based on a ratio of count rates in two energy windows straddling the 7.65 MEV iron (Fe) peak.

7. Apparatus according to Claim 6, wherein said microprocessor is programmed to maintain said count rate ratio in said two energy windows straddling the 7.65 MEV iron peak as a predetermined constant.

8. Apparatus according to any of Claims 1 to 7, further including:
f) means for generating time gates during the quiescent period between neutron bursts in a sequence of at least four such gates, to generate a sequence of count rates representative of the die away of the population of thermal neutrons produced by said fast neutron pulses, said apparatus preferably also including:
g) means for generating time gates during the quiescent period between neutron bursts, and separate from said sequence of at least four such gates, to generate a count rate representative of the background gamma ray count rate in the well borehole.

9. Apparatus according to Claim 8, wherein the inelastic gamma ray spectra, the capture gamma ray spectra and the thermal neutron die away time gate count rates are corrected for background by count rates measured in step (g).

10. Apparatus according to any of Claims 1 to 9, wherein said scintillation detector comprises a bismuth germanate detector, or comprises a material using other than a high density scintillation material for the detector.

## Patentansprüche

1. Gerät zum Messen von Gammaspektren in verrohrtem Bohrloch, bestehend aus:
a) einer elektronischen Quelle (28) monogenetischer schneller Neutronen zur Ausstrahlung in Pulsform, die Bohrlochflüssigkeit (11), die Verrohrung (30) und deren zementösen Mantel durchdringen und in die Erdformationen im Bohrlochbereich eindringen, wo sie durch thermische Energie modifiziert und durch die Atomkerne der in und um das Bohrloch befindlichen Elemente aufgefangen werden;
b) einem hochdichten Scintillationszähler (27), der optisch mit einem Photomultiplikator verbunden ist und der zum Erkennen von Gammastrahlung ausgeführt ist, die durch die erwähnten Neutronen induziert wird und Stromausgangssignale erzeugt, deren Höhe die Gammaenergie darstellt, die auf den hochdichten Scintillator auftrifft;
c) einer Auswertungsvorrichtung für Pulshöhen (26), die mit dem Ausgang des erwähnten Scintillationszählers und dem Photomultiplikator verbunden ist und dem Trennen des Gammaenergiespektrums der auftreffenden Gammastrahlen in Energiekomponenten und dem Zählen der erwähnten Energiekomponenten als Funktion der Energie dient;
d) einer Zeitgebervorrichtung (23) zum Erzeugen von Zeitgattern, mit denen schnelle durch Neutronen induzierte Gammastrahlen, thermische Neutronen-Einfang-Gammastrahlen und Hintergrund-Gammastrahlen vor ihrer Präsentation am erwähnten Impulshöhenanalysator separiert werden; und
e) einer Verstärkungssteuerung (25), die den Eisenrand des thermischen Neutronen-Einfang-Gammaspektrums zur Verstärkungsstabilisierung des erwähnten Photomultiplikatorausgangs benutzt, um auf diese Weise den Verstärkungswert zu etablieren, der auf alle gemessenen unelastischen Einfang- und Hintergrundspektren angesetzt wird.

2. Ein Gerät nach Anspruch 1, inklusive einer Vorrichtung zum Erzeugen von Gammastrahlungs-Energiespektren der durch unelastische Streuung induzierten Gammastrahlung während des Pulsierens schneller Neutronen.

3. Ein Gerät nach Anspruch 2, bei dem die erwähnte Erzeugungsvorrichtung so ausgeführt ist, daß die unelastischen Gammaspektren in Energiekomponenten aufgeteilt werden und die unelastische Gammastrahlung dargestellt wird, die durch Kohle, Sauerstoff, Silikon und Kalzium erzeugt wird.

4. Ein Gerät nach Anspruch 3, bei dem die thermischen Neutronen-Einfang-Gammaspektren der durch den Einfang erwärmter schneller Neutronen induzierten Gammastrahlung durch das stille Intervall zwischen den erwähnten Neutronenimpulsen festgestellt werden.

5. Ein Gerät nach Anspruch 4, bei dem die erwähnten thermischen Neutronen-Einfang-Gammaspektren in Energiekomponenten unterteilt werden, die Einfang-Gammastrahlen aus Wasserstoff, Silikon, Kalzium, Chlor, Potassium, Schwefel, Titan und Eisen darstellen.

6. Ein Gerät nach Anspruch 5, bei dem die erwähnte Verstärkungssteuerung (25) aus folgendem besteht: einem zum Regeln der Verstärkung des erwähnten Photomultiplikators programmierten Mikroprozessor, wobei die Verstärkung auf einem Verhältnis der Zählraten in zwei Energiefenstern beruht, die die 7,65 MEV Eisen (Fe)-Spitze überspannen.

7. Ein Gerät nach Anspruch 6, bei dem der erwähnte Mikroprozessor zum Beibehalten des erwähnten Zählratenverhältnisses in den zwei Energiefenstern programmiert ist, die als festgelegte Konstante die 7,65 MEV Eisenspitze überspannen.

8. Ein Gerät nach einem der Ansprüche 1 bis 7, weiter bestehend aus:
f) einer Vorrichtung zum Erzeugen von Zeitgattern in der stillen Zeit zwischen den Neutronenstößen in einer Reihenfolge von mindestens vier solcher Gatter, um eine Folge von Zählungsraten zu erzeugen, die das Absterben der Besetzung der thermischen Neutronen, die von den schnellen Neutronenimpulsen erzeugt wurden, darstellen, wobei das erwähnte Gerät vorzugsweise folgendes beinhaltet;
g) eine Vorrichtung zum Erzeugen von Zeitgattern in der stillen Zeit zwischen Neutronenstößen und Trennen aus der erwähnten Folge von wenigstens vier solcher Gatter, um eine Zählrate zu erzeugen, die die Hintergrund-Gammastrahlungszählrate im Bohrloch darstellt.

9. Ein Gerät nach Anspruch 8, bei dem die unelastischen Gammaspektren, die Einfang-Gammaspektren und die Gatterzählrate der thermischen Neutronenabsterbezeit durch die in Schritt (g) gemessenen Zählraten bezüglich des Hintergrunds korrigiert werden.

10. Ein Gerät nach einem der Ansprüche 1 bis 9, bei dem der Scintillationszähler einen Wismut-Germanatdetektor oder einen anderen Detektor enthält, der nicht aus hochdichtem Scintillationsstoff besteht.

## Revendications

1. Un dispositif pour mesurer des spectres de rayons gamma dans un puits cuvelé, ce dispositif comportant:
a) une source électronique (28) de neutrons rapides monoénergétiques émis par impulsions pour traverser le fluide du puits (11), le cuvelage (30) et sa gaine en ciment, et pour pénétrer dans les formations souterraines au voisinage du puits,pour être modérés jusqu'à une énergie thermique et capturés par les noyaux des éléments présents dans le puits et au voisinage du puits.
b) un scintillateur à haute densité (27), couplé optiquement à un photomultiplicateur, pour détecter les rayons gamma induits par les dits neutrons et pour produire des impulsion électriques de sortie dont l'amplitude est représentative de l'énergie d'un rayon gamma incident qui frappe ledit scintillateur à haute densité;
c) un analyseur d'amplitude d'impulsions (26) connecté à la sortie du dit scintillateur et du dit photomultiplicateur pour séparer le spectre d'énergie des rayons gamma incidents en composantes énergétiques et pour compter lesdites composantes énergétiques en fonction de l'énergie;
d) un dispositif de temporisation (23) pour générer des portes temporelles pour séparer dans le temps les rayons gamma induits par les neutrons rapides, les rayons gamma de capture de neutrons thermiques, et les rayons gamma ambiants avant leur présentation au dit analyseur d'amplitude d'impulsions; et
e) un dispositif de commande de gain (25) qui utilise le bord fer du spectre de rayons gamma de capture de neutrons thermiques pour stabiliser le gain de la sortie du dit photomultiplicateur, la valeur de gain ainsi obtenue étant appliquée à tous les spectres inélastiques de capture et de fond mesurés.

2. Un dispositif selon la revendication 1, qui inclut un moyen de production de spectres d'énergie des rayons gamma de rayonnements gamma induits par diffusion inélastique pendant les dites impulsions de neutrons rapides.

3. Un dispositif selon la revendication 2, dans lequel ledit moyen de production est configuré pour diviser les spectres de rayons gamma inélastiques en composantes énergétiques représentatives de rayonnements gamma inélastiques produits par le carbone, l'oxygène, le silicium et le calcium.

4. Un dispositif selon la revendication 3, dans lequel les spectres des rayonnements gamma de capture de neutrons thermiques induits par la capture de neutrons rapides thermalisés sont détectés pendant l'intervalle de repos qui survient entre les dites impulsions de neutrons.

5. Un dispositif selon la revendication 4, dans lequel les dits spectres de rayons gamma de capture de neutrons thermiques sont divisés en composantes énergétiques représentatives des rayons gamma de capture émis par l'hydrogène, le silicium, le calcium, la chlore, le potassium, le soufre, le titane et le fer.

6. Un dispositif selon la revendication 4, dans lequel ledit moyen de commande de gain (25) comporte un microprocesseur programmé pour commander le gain du dit photomultiplicateur sur la base d'un rapport de taux de comptage dans deux fenêtres d'énergie qui chevauchent la crête de 7,65 MeV du fer (Fe).

7. Un dispositif selon la revendication 6, dans lequel ledit microprocesseur est programmé de manière à maintenir à une valeur constante prédéterminée ledit rapport des taux de comptage dans les dites deux fenêtres d'énergie qui chevauchent la crête Fe de 7,65 MeV.

8. Un dispositif selon l'unes quelconque des revendications 1 à 7, qui inclut de plus:
f) un moyen de génération de portes temporelles pendant la période de repos entre les salves de neutrons, en une séquence de quatre au moins des dites portes, pour générer une séquence de taux de comptage représentative de la décroissance de la population de neutrons thermiques produits par les dites impulsions de neutrons rapides, ledit dispositif incluant également de préférence:
g) un moyen de génération de portes temporelles pendant la période de repos entre les salves de neutrons, et de séparation, de ladite séquence, d'un minimum de 4 de ces portes, pour générer un taux de comptage représentatif du taux de comptage des rayons gamma ambiants à l'intérieur du puits.

9. Un dispositif selon la revendication 8, dans lequel l'erreur due aux rayonnements de fond au niveau des spectres de rayons gamma inélastiques, des spectres de rayons gamma de capture et des taux de comptage de décroissance des neutrons thermiques est corrigée par les taux de comptage mesurés à la phase (g).

10. Un dispositif selon l'une quelconque des revendications 1 à 9, dans lequel ledit scintillateur comporte un détecteur au germanate de bismuth, ou comporte un matériel qui utilise, pour la détection, une matière autre qu'un scintillateur à haute densité.
